Europäisches Patentamt

European Patent Office

Office européen des brevets

(19)

(11) Veröffentlichungsnummer : **0 215 254**
**B1**

(12) **EUROPÄISCHE PATENTSCHRIFT**

(45) Veröffentlichungstag der Patentschrift :
17.05.89

(51) Int. Cl.⁴ : **B 01 D 35/28**

(21) Anmeldenummer : 86110563.3

(22) Anmeldetag : 30.07.86

(54) **Separator für das automatische, kontinuierliche Entfernen von Knoten und/oder Fremdkörpern aus Feststoff-Flüssigkeits-Gemischen.**

(30) Priorität : 28.08.85 DE 3530626

(43) Veröffentlichungstag der Anmeldung :
25.03.87 Patentblatt 87/13

(45) Bekanntmachung des Hinweises auf die Patenterteilung : 17.05.89 Patentblatt 89/20

(84) Benannte Vertragsstaaten :
AT FR IT NL

(56) Entgegenhaltungen :
WO-A-84 /042 93
CH-A- 466 167
DE-A- 2 412 282
DE-A- 3 045 341

(73) Patentinhaber : **Fried. Krupp Gesellschaft mit beschränkter Haftung**
**Altendorfer Strasse 103**
**D-4300 Essen 1 (DE)**

(72) Erfinder : **Fiedler, Bernhard**
**Lindenstrasse 108 A**
**D-4048 Grevenbroich 1 (DE)**

Jouve, 18, rue St-Denis, 75001 Paris, France

## Beschreibung

Die Erfindung betrifft eine Vorrichtung zum Entfernen von Knoten- und/oder Fremdkörpern aus Suspensionen odet Feststoff-Flüssigkeits-Gemischen, insbesondere kristallinen Zucker-Sirup-Gemischen, wie Füllmassen oder Magma, bestehend aus einer Siebeinrichtung, die innerhalb von Zufuhrleitungen oder dergleichen eingebaut ist.

Vorrichtungen zum Auffangen von Knoten oder Fremdkörpern sind als Siebkörbe innerhalb der Zufuhrleitungen in der Industrie bekannt. Zum Reinigen der Siebkörbe mun der Zulauf der Füllmasse gestoppt werden, damit der Siebkorb entfernt, gereinigt und danach wieder eingesetzt werden kann. Besonders in der Zuckerindustrie sind in den Füllmasse-Zuführungsleitungen zu den kontinuierlich arbeitenden Zentrifugen derartige Knotenfänger eingebaut. Sie sollen die Zuckerknoten und die Fremdkörper festhalten, die den weiteren Produktionsablauf stören.

Der Zuckerknotenanteil kann zeitweise sehr hoch sein. Der Bedienungsmann der Zentrifugen muß gleichzeitig mehrere Maschinen bedienen. Er ist aber aus zeitlichen Gründen nicht in der Lage, die Siebkörbe laufend zu reinigen.

Das Abstellen der Zentrifugen, das Aufschrauben des Siebgehäuses, das Herausheben der Siebkörbe sowie das Reinigen und Ausdämpfen und das Wiedereinbauen nimmt nämlich sehr viel Zeit in Anspruch. Der Bedienungsmann ist in seiner 8-stündigen Schicht nicht in der Lage mehr als 3 Körbe auszubauen. Er darf ja die Überwachung der übrigen Maschinen nicht vernachlässigen. In den modernen Zuckerfabriken hat ein Zentrifugen-Bedienungsmann meist mehr als 10 Maschinen zu beaufsichtigen. Er kommt also zeitlich mit der Reinigung der Siebkörbe nicht zurecht. Er schafft Abhilfe, indem er die Siebkörbe entfernt und nicht wieder einsetzt. Dadurch erleidet die Produktion Schaden, weil die Qualität der Füllmasse gemindert wird, außerdem die Zentrifugen verstopfen und die Decksiebe beschädigt werden.

Der Erfindung liegt die Aufgabe zugrunde, eine Vorrichtung zu schaffen, mit der in kontinuierlicher Weise Zuckerknoten und Fremdkörper aus einer Suspension oder einem Feststoff-Flüssigkeits-Gemisch, wie den zur Verkrustung und Knotenbildung neigenden Füllmassen in der Zuckerindustrie, vor deren Weiterverarbeitung entfernt werden.

Diese Aufgabe wird dadurch gelöst, daß die Siebeinrichtung innerhalb eines Gehäuses als Siebrost ausgebildet ist, und daß in Fließrichtung des zu reinigenden Gemisches gesehen unterhalb des Siebrostes mehrere gleichmäßig verteilte, rotierende Separatorstäbe angeordnet sind, die mit ihren freien Enden den Siebrost (5) derart durchgreifen, daß die von dem Siebrost aufgefangenen Knoten oder Fremdkörper eine seitliche Transportkomponente erhalten und somit einer seitlich neben dem Siebrost vorgesehenen Ausfallöffnung des Gehäuses zuführbar sind. Dabei konnen die Separatortäbe in vorteilhafter Weise mit einer rotierenden Welle verbunden, in Umfangsrichtung gesehen versetzt und entgegen der Drehrichtung spiralförmig ausgebildet sein.

Mit dieser Vorrichtung werden die Knoten und Fremdkörper von dem Siebrost aufgefangen und bleiben dort liegen. Die rotierenden, den Siebrost durchgreifenden Stäbe heben die Knoten oder Fremdkörper an und geben ihnen eine Austragskomponente in Richtung der Ausfallöffnung. Von hier können sie in ein Auffanggefäß fallen oder weitertransportiert werden.

Damit reinigt sich der Siebrost selbst und sorgt in Verbindung mit den rotierenden Separatorstäben für eine automatische kontinuierliche Entfernung der unerwünschten Knoten oder Fremdkörper aus dem zu reinigenden Gemisch.

Ist der Siebrost aus U- oder V-förmigen Roststäben gebildet, die mittels Drahtstäben an einem Gehäuseflansch befestigt sind, der zwischen dem oberen Flansch des Gehäuses und der Flansch der Zufuhrleitung sitzt, so kann der Siebrost nach Beendigung einer Kampagne aus dem Gehäuse entnommen, einwandfrei gereinigt und für die nächste Kampagne bereitgestellt werden.

Ein Ausführungsbeispiel der Erfindung ist an Hand einer Zeichnung schematisch dargestellt und nachfolgend näher beschrieben. Es zeigt :

Fig. 1 eine Längsschnitt,

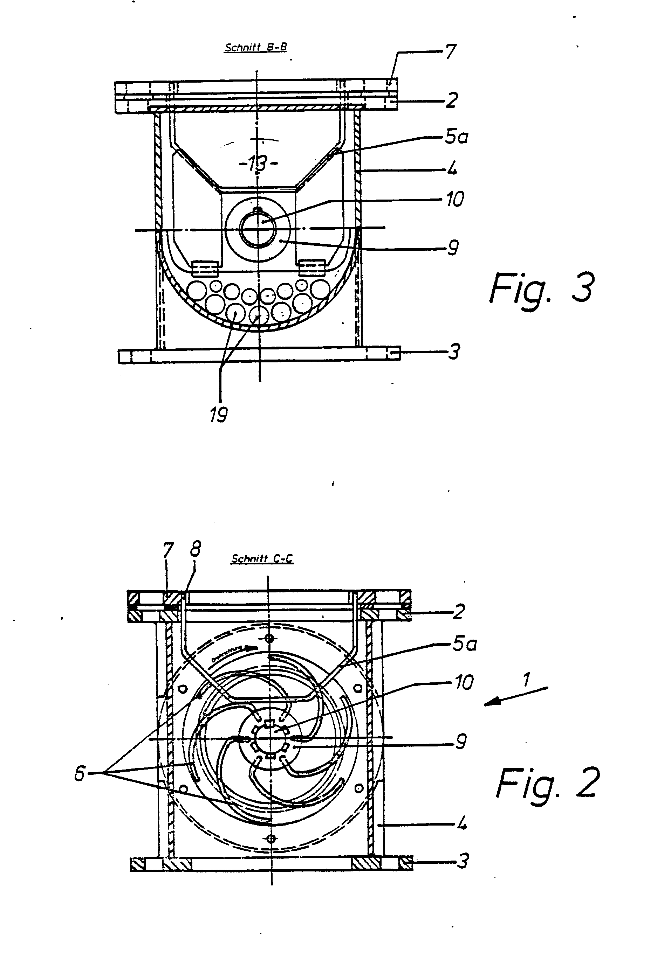

Fig. 2 einen Schnitt gemäß Linie C-C in Fig. 1,
Fig. 3 einen Schnitt gemäß Linie B-B in Fig. 1,

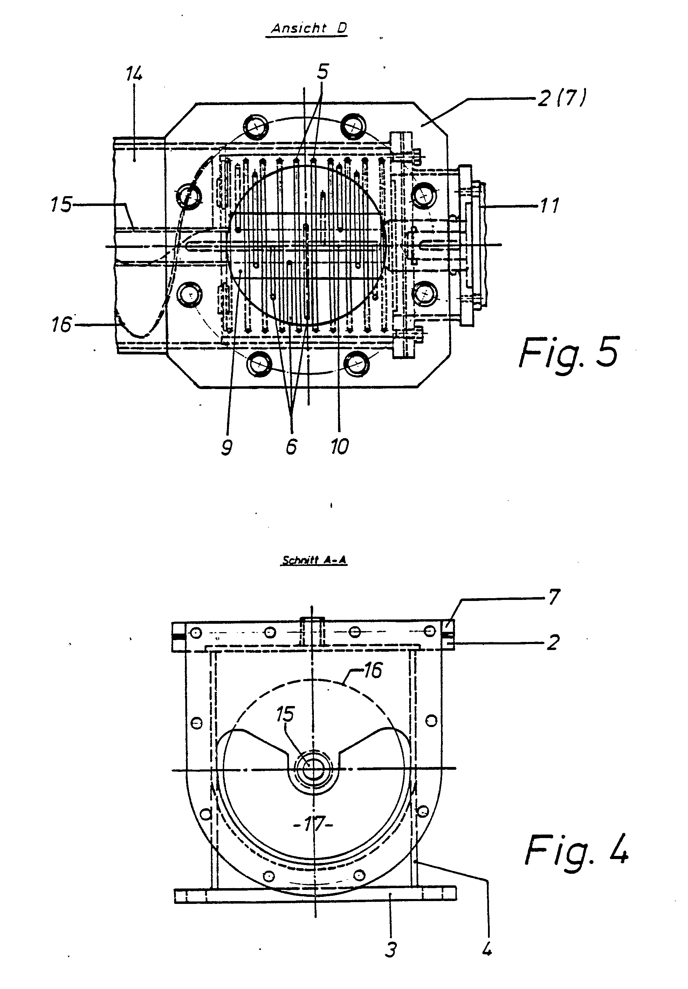

Fig. 4 einen Schnitt gemäß Linie A-A in Fig. 1,
Fig. 5 eine Ansicht in Richtung des Pfeiles D.

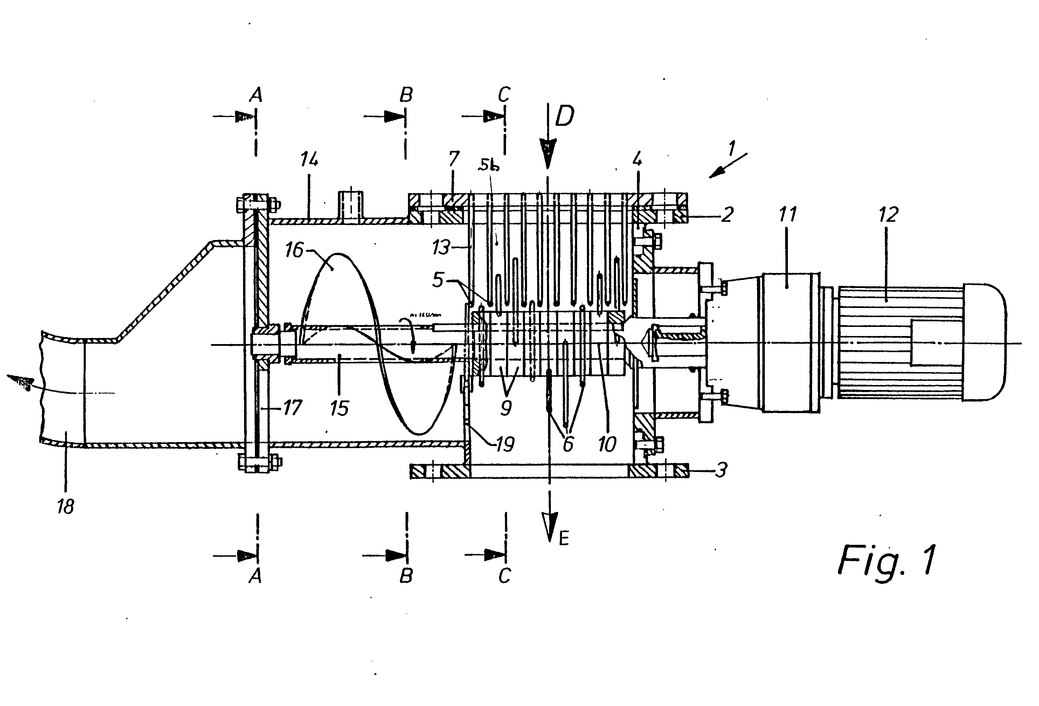

In einer nicht dargestellten Zuführungsleitung ist ein Gehäuse 1 mit seinem oberen Flansch 2 und seinem unteren Flansch 3 eingebaut. Mit 4 ist die Gehäusewand des Gehäuses 1 bezeichnet. Im oberen Teil des Gehäuses ist ein Siebrost 5 eingebaut, der aus Roststäben 5a gebildet ist. Die Roststäbe 5a können gerade, U-förmig, V-förmig oder auch konkav oder dergleichen gebogen sein. Sie sind so ausgebildet, daß sie im tiefsten Punkt in axialer Richtung eine gerade Rostfläche bilden, so wie es in Fig. 1 dargestellt ist. Die Fläche kann auch zum Ausfall hin geneigt sein. Die Roststäbe 5a können über Tragestäbe 8 mit einem Flansch 7 verbunden sein, der zwischen dem Flansch 2 und dem nicht dargestellten Flansch der nicht dargestellten Zufuhrleitung einbaubar ist. Damit läßt sich der Siebrost 5 mit einfachsten Mitteln aus dem Gehäuse 1 ausbauen. Die Roststäbe 5a sind so angeordnet, daß, sie freie Durchgangsöffnungen 5b bilden und somit den Platz für den Durchtritt von Separatorstäben 6 schaffen. So ist jedem Schlitz 5b ein Separatorstab 6 zugeordnet, die mittels Halteringen 9 auf einer Welle 10 sitzen und über den Umfang gesehen versetzt auf der Welle angeordnet sind. Die Separatorstäbe 6 sind entgegen der Drehrichtung spiralförmig ausgebildet. Mit dieser Maßnahme wird erreicht, daß ein auf dem Siebrost 5 liegender Knoten oder Fremdkörper von dem ersten Separatorstab 6 angehoben und damit seitlich in Richtung einer Ausfallöffnung 13 verschoben wird. Der nächstfolgende Separatorstab 6 verhindert, daß der Knoten entgegen der Ausfallrichtung verschoben wird. Tritt der nächste Separatorstab durch den Siebrost 5 hindurch, so wird der Knoten ein zweites mal angehoben und wiederum seitlich verschoben. Dies geschieht solange, bis der Knoten das axiale Ende des Siebrostes 5 erreicht hat und über die Ausfallöffnun 13 im Gehäuse 1 dieses verläßt. Die Welle 10 wird dem Ausführungsbeispiel über ein Getriebe 11 von einem Motor 12 angetrieben. Denkbar ist auch ein Hydraulik- oder ein Pneumatik-Antrieb. Auch kann die Welle 10 von Zeit zu Zeit per Hand gedreht und damit der Siebrost 5 von Knoten oder Fremdkörpern gereinigt werden. An die Ausfallöffnung 13 schließt sich ein seitliches Gehäuse 14 an, in dem auf einer Verlängerung 15 der Welle 10 eine Schnecke 16 angebracht ist, die die aus der Ausfallöffnung 13 ausfallenden Knoten weitertransportiert. Zu diesem Zweck ist die der Ausfallöffnung 13 gegenüberliegende Gehäusewand des Gehäuses 14 mit einer Austrittsöffnung 17 versehen. An diese Öffnung 17 kann eine Auffangvorrichtung angebracht werden, die von Zeit zu Zeit zu entleeren ist. Diese kann so groß sein, daß der Bedienungsmann während seiner normalen Schicht diese Auffangvorrichtung nur einmal zu entleeren braucht. Für einen automatischen Betrieb ist es denkbar, an die Austtittsöffnung 17 eine Weiterführungsleitung 18 anzuschließen, mittels der die Knoten einer Auflösungsvorrichtung oder dergleichen zugeführt werden. Die am Siebrost 5 von den Knoten befreite Füllmasse tritt am unteren Ende des Gehäuses 1 in Pfeilrichtung E aus und gelangt von hier aus beispielsweise direkt in eine Zentrifuge. Je nach Zulaufhöhe und den Druckverhältnissen innerhalb der nicht dargestellten Zufuhrrungsleitung wird die Weiterführungsleitung 18 schräg nach oben geführt, so daß keine Flüssigkeit aus dem Gehäuse 14 austreten kann.

Die an den Knoten und Fremdkörpern anhaftende Flüssigkeit bzw. die von diesen mitgeführte Flüssigkeit fließt durch Sieböffnungen 19 innerhalb der Gehäusewand 4 des Gehäuses 1 in dieses zurück und kann so mit der übrigen Füllmasse weitergeführt werden.

**Patentansprüche**

1. Vorrichtung zum Entfernen von Knoten-und/oder Fremdkörpern aus Suspensionen oder Feststoff-Flüssigkeits-Gemischen, insbesondere Kristallinen Zucker-Sirup-Gemischen, wie Füllmassen oder Magma, bestehend aus einer Siebeinrichtung, die innerhalb von Zufuhrleitungen oder dergleichen eingebaut ist, dadurch gekennzeichnet, daß die Siebeinrichtung innerhalb eines Gehäuses (1) als Siebrost (5) ausgebildet ist, und daß in Fließrichtung des zu reinigenden Gemisches gesehen unterhalb des Siebrostes (5) mehrere gleichmäßig verteilte, rotierende Separatorstäbe (6) angeordnet sind, die mit ihren freien Enden den Siebrost (5) derart durchgreifen, daß die von dem Siebrost (5) aufgefangenen Knoten oder Fremdkörper eine seitliche Transportkomponente erhalten und somit einer seitlich neben dem Siebrost (5) vorgesehenen Ausfallöffnung (13) des Gehäuses (1) zuführbar sind.

2. Vorrichtung nach Anspruch 1, dadurch gekennzeichnet, daß der Siebrost (5) aus U- oder V-förmigen Roststäben (5a) gebildet ist, die mittels Tragstäben (8) an einem Gehäuseflansch (7) befestigt sind, der zwischen dem oberen Flansch (2) des Gehäuses (1) und dem Flansch der Zufuhrleitung sitzt.

3. Vorrichtung nach Anspruch 1, dadurch gekennzeichnet, daß die Separatorstäbe (6) mit einer rotierenden Welle (10) verbunden sind.

4. Vorrichtung nach den Ansprüchen 1 und 3, dadurch gekennzeichnet, daß die Separatorstäbe (6) in Umfangsrichtung gesehen Schneckenform bildend versetzt auf der Welle (10) angeordnet sind.

5. Vorrichtung nach den Ansprüchen 1, 3 und 4, dadurch gekennzeichnet, daß die Separatorstäbe (6) jeweils mit einem Haltering (9) verbunden sind, die fest auf der Welle (10) sitzen.

6. Vorrichtung nach den Ansprüchen 1 und 3 bis 5, dadurch gekennzeichnet, daß die Separatorstäbe (6) entgegen der Drehrichtung spiralförmig ausgebildet sind und mit wenigstens der Hälfte ihrer Länge den Siebrost (5) durchgreifen.

7. Vorrichtung nach Anspruch 1, dadurch gekennzeichnet, daß an die Ausfallöffnung (13) ein seitliches Gehäuse (14) mit einem Transportelement (16) angeschlossen ist.

8. Vorrichtung nach Anspruch 7, dadurch gekennzeichnet, daß das Transportelement als Schnecke (16) ausgebildet und auf einer Verlängerung (15) der Welle (10) angebracht ist.

9. Vorrichtung nach den Ansprüchen 7 und 8, dadurch gekennzeichnet, daß an das seitliche Gehäuse (14) über eine Austrittsöffnung (17) eine Auffangvorrichtung oder eine Weiterführungsleitung (18) angeschlossen ist.

10. Vorrichtung nach den Ansprüchen 7 bis 9, dadurch gekennzeichnet, daß unterhalb der Welle 10 und unterhalb der Ausfallöffnung (13) das Gehäuse (1) mit Sieböffnungen (19) versehen und die Weiterführungsleitung (18) nach oben geführt ist.

11. Vorrichtung nach Anspruch 1, dadurch gekennzeichnet, daß die Welle (10) periodisch oder in Intervallen antreibbar ist.

12. Vorrichtung nach den Ansprüchen 1 und 11, dadurch gekennzeichnet, daß die Welle (10) mit einem Handantrieb oder einem mechanischen Antrieb (11) versehen ist, wobei der mechanische Antrieb elektrisch, hydraulisch oder pneumatisch antreibbar ist.

**Claims**

1. An apparatus for removing tailings and/or foreign bodies from suspensions or mixtures of solids and liquids, more particularly mixtures of crystalline sugar and syrup, such as massecuite or magma, comprising a sieving device incorporated inside supply pipes or the like, characterized in that the sieving device is constructed in the form of a sieving grid (5) inside a casing (1), and disposed below the sieving grid (5), viewed in the direction of flow of the mixture to be purified, are a plurality of uniformly distributed rotating separator rods (6) which so engage by their free ends through the sieving grid (5) that the tailings or foreign bodies intercepted by the sieving grid (5) are given a lateral conveying component and can therefore be fed to a drainage opening (13) with which the casing (1) is formed laterally alongside the sieving grid (5).

2. An apparatus according to claim 1, characterized in that the sieving grid (5) is formed by U-shaped or V-shaped grid rods (5a) attached by means of supporting rods (8) to a casing flange (7) which is disposed between the top flange (2) of the casing (i) and the flange of the supply pipe.

3. An apparatus according to claim 1, characterized in that the separator rods (6) are connected to a rotating shaft (10).

4. An apparatus according to claims 1 and 3, characterized in that the separator rods (6) are disposed offset on the shaft (10) to form a screw shape, viewed in the peripheral direction.

5. An apparatus according to claims 1, 3 or 4, characterized in that each of the separator rods (6) is connected to a retaining ring (9) disposed rigidly on the shaft (10).

6. An apparatus according to claims 1 and 3 to 5, characterized in that the separator rods (6) are constructed spirally contrary to the direction of rotation and engage through the sieving grid (5) by at least half their length.

7. An apparatus according to claim 1, characterized in that a lateral casing (14) having a conveying element (16) is connected to the drainage opening (13).

8. An apparatus according to claim 7, characterized in that the conveying element is constructed in the form of a screw (16) and is disposed on a prolongation (15) of the shaft (10).

9. An apparatus according to claims 7 and 8, characterized in that an intercepting device or a transfer pipe (18) is connected via a discharge opening (17) to the lateral casing (14).

10. An apparatus according to claims 7 to 9, characterized in that the casing (1) is formed with sieving openings (19) below the shaft (10) and below the drainage opening (13), and the transfer pipe (18) extends upwards.

11. An apparatus according to claim 1, characterized in that the shaft (10) can be driven intermittently or at intervals.

12. An apparatus according to claims 1 and 11, characterized in that the shaft (10) has a manual drive or a mechanical drive (11), and the mechanical drive can be driven electrically, hydraulically or pneumatically.

## Revendications

1. Dispositif d'élimination des grumeaux et/ou de corps étrangers à partir de suspensions ou de mélanges liquide-solide, en particulier de mélanges sirop-sucre cristallisé, comme des masses cuites ou des magmas constitué par une installation de tamisage installée à l'intérieur de canalisations d'arrivée ou similaires, caractérisé en ce que le dispositif de tamisage est formé, à l'intérieur d'un caisson (1), d'une grille de tamisage (5) et en ce que, dans le sens du courant du mélange à épurer, on a disposé au-dessous de la grille de tamisage (5), plusieurs barreaux tournants (6) de séparateur répartis régulièrement qui, avec leurs extrémités libres, pénètrent à travers la grille de tamisage (5) de telle façon que les grumeaux ou les corps étrangers repris par la grille de tamisage (5) reçoivent une composante de transport latérale et ainsi peuvent être envoyés vers une ouverture de décharge (13) du caisson (1) prévue latéralement contre la grille de tamisage (5).

2. Dispositif suivant la revendication 1, caractérisé en ce que la grille de tamisage (5) est constituée de barreaux de tamisage (5) en forme de U ou de V, qui sont fixés au moyen de barres porteuses (8), à une bride (7) du caisson qui se trouve entre la bride supérieure (2) du caisson (1) et la bride de la conduite d'arrivée.

3. Dispositif suivant la revendication 1, caractérisé en ce que les barreaux de séparateur (6) sont reliés à un arbre tournant (10).

4. Dispositif suivant les revendications 1 et 3, caractérisé en ce que les barreaux de séparateur (6), vus suivant la direction de la circonférence, sont disposés sur l'arbre (10) décalés en formant vis sans fin.

5. Dispositif suivant les revendications 1, 3 et 4, caractérisé en ce que les barreaux de séparateur (6) sont reliés chacun à un anneau support (9) fixés sur l'arbre (10).

6. Dispositif suivant les revendications 1 et 3 à 5, caractérisé en ce que les barreaux de séparateur 6 sont disposés en forme de spirale dans le sens inverse du sens de rotation et pénètrent par au moins la moitié de leur longueur dans la grille de tamisage (5).

7. Dispositif suivant la revendication 1, caractérisé en ce qu'à l'ouverture de décharge (13), est raccordé un caisson latéral (14) comportant un moyen de transport (16).

8. Dispositif suivant la revendication 7, caractérisé en ce que le moyen de transport est constitué d'une vis sans fin (16) et est disposé sur un prolongement (15) de l'arbre (10).

9. Dispositif suivant les revendications 7 et 8, caractérisé en ce que, sur le caisson latéral (14), est raccordé par l'intermédiaire d'un orifice de sortie (17) un moyen de réception ou une conduite d'enlèvement (18).

10. Dispositif suivant les revendications 7 à 9, caractérisé en ce qu'en dessous de l'arbre (10) et en dessous de l'ouverture de décharge (13), le caisson (1) est prévu avec des orifices (19) de tamisage et que la conduite d'enlèvement (18) est dirigée vers le haut.

11. Dispositif suivant la revendication 1, caractérisé en ce que l'arbre (10) peut être entraîné périodiquement ou par intervalles.

12. Dispositif suivant les revendications 1 et 11, caractérisé en ce que l'arbre (10) est prévu avec un entraînement manuel ou mécanique (11), l'entraînement mécanique pouvant être actionné électriquement, hydrauliquement ou pneumatiquement.

Fig. 1

Schnitt B-B

-13-

7

2

5a

4

10

9

3

19

Fig. 3

Schnitt C-C

7  8

2

5a

10

1

9

6

4

3

Fig. 2

Ansicht D

Fig. 5

Schnitt A-A

Fig. 4